# EUROPÄISCHE PATENTANMELDUNG

(11) **EP 2 353 692 A2**
(43) Veröffentlichungstag der Anmeldung: **10.08.2011**
(21) Anmeldenummer: 11152182.9
(22) Anmeldetag: 26.01.2011
(51) Int. Cl.: B01D 29/96, B01D 35/16, F02M 37/22

(54) **Filtereinrichtung**

(30) Priorität: 28.01.2010 DE 102010005980
(71) Anmelder: MAHLE International GmbH, 70376 Stuttgart (DE)
(72) Erfinder: Gänswein, Matthias, 73732 Esslingen (DE); Layer, Markus, 71404 Korb (DE)
(74) Vertreter: BRP Renaud & Partner

(57) **Zusammenfassung**

Die Erfindung betrifft eine Filtereinrichtung (1), insbesondere einen Öl- oder Kraftstofffilter, mit einem Filtergehäuse (2) und einem Ringfilterelement (3), das an einer unteren Endscheibe (9) einen axial abstehenden Pin (10) aufweist, und einem im Filtergehäuse (2) angeordneten Funktionsträger (4), der eine mit einem Leerlaufkanal kommunizierend verbundene und als Leerlauföffnung ausgebildete erste Pinaufnahme (17) aufweist, in die der Pin (10) des Ringfilterelementes (3) in eingebautem Zustand dichtend eingreift. Durch Ausstattung des Funktionsträgers (4) mit einer zweiten Pinaufnahme (18), in die bei der Montage eines alternativen zweiten Ringfilterelementes (3) ein Pin (10) desselben eingreifen kann, während die erste Pinaufnahme (17) und damit die Leerlauföffnung geöffnet bleibt, kann eine Beschädigung der Filtereinrichtung (1) durch den Pin (10) der alternativen zweiten Ringfilterelementes (3) verringert bzw. verhindert werden.

## Beschreibung

Die vorliegende Erfindung betrifft eine Filtereinrichtung, insbesondere einen Öl-oder Kraftstofffilter, mit den Merkmalen des Oberbegriffs des Anspruchs 1.

Bei derzeit üblichen Filtereinrichtungen werden heutzutage unter anderem Ringfilterelemente verwendet, die austauschbar sind, so dass die Filtereinrichtung nur hinsichtlich des Ringfilterelementes erneuert werden kann. Um zu verhindern, dass ungeeignete Ringfilterelemente in die Filtereinrichtung eingesetzt werden, kann die Filtereinrichtung und/oder das Ringfilterelement mit einer Einbausicherung versehen werden, so dass in die Filtereinrichtung eingebaute ungeeignete Filter zu einer Fehlfunktion oder einem nicht Funktionieren der Filtereinrichtung führen, die/das wiederum durch das Fahrzeugmanagement erkannt werden kann, sodass eine Fehlermeldung an den Benutzer ausgegeben werden kann.

Die vorliegende Erfindung beschäftigt sich mit dem Problem, für eine solche Filtereinrichtung eine verbesserte oder zumindest eine andere Ausführungsform anzugeben, die sich insbesondere durch eine Einbausicherung auszeichnet, mittels der eine Beschädigung der Filtereinrichtung und/oder eines ungeeigneten Filterelementes bei Einbau desselben vermieden werden kann.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Filtereinrichtung, insbesondere bei einem Öl- oder Kraftstofffilter einen Funktionsträger mit einer zweiten Pinaufnahme als weitere Komponente einer Einbausicherung auszustatten. Die erfindungsgemäße Filtereinrichtung besitzt ein Filtergehäuse und ein Ringfilterelement, das an einer unteren Endscheibe einen axial abstehenden Pin als einen Teil der Einbausicherung aufweist, ebenso wie den im Filtergehäuse angeordneten Funktionsträger, der eine mit einem Leerlaufkanal kommunizierend verbundene und als Leerlauföffnung ausgebildete erste Pinaufnahme als weitere Komponente der Einbausicherung aufweist. In diese erste Pinaufnahme greift der Pin des geeigneten Ringfilterelements in eingebautem Zustand dicht ein und verschließt dadurch den Leerlaufkanal. Bei der Verwendung eines alternativen, insbesondere ungeeigneten zweiten Ringfilterelements, welches einen fluchtend zur zweiten Pinaufnahme angeordneten Pin aufweist, greift dieser im Einbauzustand in die zweite Pinaufnahme ein, während die erste Pinaufnahme und damit die Leerlauföffnung geöffnet bleibt. Wird somit die Filtereinrichtung mit einer solchen zweiten Pinaufnahme ausgestattet, ist der Pin auch eines alternativen zweiten und für die Filtereinrichtung ungeeigneten Ringfilterelementes in der zweiten Pinaufnahme während des Einbaus versenkbar, sodass der Pin des alternativen zweiten und ungeeigneten Ringfilterelements nicht zu einer Beschädigung der Filtereinrichtung, des Funktionsträgers und/oder des Ringfilterelementes selbst führen kann, wobei jedoch gewährleistet ist, dass aufgrund der geöffneten Leerlauföffnung ein ordnungsgemäßer Betrieb der Filtereinrichtung verhindert ist, was üblicherweise zu einer Fehlermeldung führt und gegebenenfalls dem Benutzer mitgeteilt werden kann, so dass das ungeeignete Filterelement ausgetauscht werden kann.

Eine Filtereinrichtung weist üblicherweise ein Gehäuse auf, in das ein Filterelement eingebaut werden kann. Dieses Filterelement kann vorzugsweise als Ringfilterelement ausgebildet werden, wobei das Ringfilterelement bzw. das Filterelement den Gehäuseinnenraum in montiertem Zustand in einen Rohraum und in einen Reinraum unterteilt. Das zu reinigende Fluid wird in der Filtereinrichtung vom Rohraum durch das Filterelement in den Reinraum gepresst, wodurch das Fluid von Schwebstoffen gereinigt wird. Speziell im Falle eines Ringfilterelementes ist im Gehäuseinnenraum üblicherweise ein Dom angeordnet, auf den das Ringfilterelement aufgesteckt wird und durch den das Ringfilterelement ggf. stabilisiert wird. Ein solcher Dom, der die Funktion zumindest der Stabilisierung des Ringfilterelementes zur Aufgabe hat, kann auch zusammen mit anderen Funktionselementen zu einem Funktionsträger zusammengefasst werden. Ein solcher Funktionsträger kann mit dem Gehäuse bzw. Gehäuseboden verbunden sein oder einstückig mit dem Gehäuse bzw. Gehäuseboden ausgebildet sein. Vorteilhaft ist die Ausbildung des Funktionsträgers als separates Bauteil, da durch Auswahl verschiedener Funktionsträger bei der Montage der Filtereinrichtung unterschiedlich funktionelle Filtereinrichtungen bei gleichbleibendem Gehäuse und gleichbleibenden Anschlüssen hergestellt werden können. Der Funktionsträger kann durch Verkleben, Vernieten, Verschrauben, Verschweißen, durch Verbördeln und andere Umformverfahren mit dem Gehäuse bzw. dem Gehäuseboden verbunden werden. Zu diesem Zweck kann der Funktionsträger eine Befestigungseinrichtung in Form zumindest einer radial abstehenden Befestigungskonsole aufweisen. Bevorzugt sind zwei, drei oder vier radial abstehende Befestigungskonsolen an dem Funktionsträger ausgebildet.

Der Funktionsträger kann mit weiteren Funktionselementen, wie z. B. Aufnahmen, Führungen, Öffnungen und Kanalstrukturen ausgestattet sein. Der Funktionsträger kann als Spritzgussteil, Gussteil oder Blechbauteil ausgebildet sein, wobei Materialien wie Kunststoffe, Keramiken oder Metalle ggf. kombiniert und/oder als Kompositmaterialien eingesetzt werden können.

Im Falle der Verwendung eines Funktionsträgers, kann im Gehäuse bzw. Gehäuseboden an das/den der Funktionsträger angebunden wird, eine Leerlaufkanalstruktur ausgebildet sein, die mit der als Leerlauföffnung ausgebildeten Pinaufnahme fluidisch verbunden ist und über die das Fluid von der Leerlauföffnung kommend aus dem Gehäuse austreten kann. Eine solche Leerlaufkanalstruktur kann ein oder mehrere Leerlaufkanäle, die ggf. miteinander verbunden sind, aufweisen.

Des Weiteren ist am Funktionsträger zu einer jeweiligen Pinaufnahme zugeordnet eine ringstegartige Führungskontur ausgebildet, die in einer Umfangsrichtung verlaufend zu einer Seite der Pinaufnahme hin in der Höhe absinkend ausgebildet ist, so dass der auf der Führungskontur aufsetzende Pin des Ringfilterelementes bei Drehung des Ringfilterelementes zur Pinaufnahme hin geleitet und abgesenkt wird. Ist der Pin nun nach dementsprechendem Drehen bei der Pinaufnahme angelangt, so kann er in der Pinaufnahme versenkt werden. Wird nun ein alternatives zweites und für die Filtereinrichtung ungeeignetes Ringfilterelement, das ebenfalls einen Pin aufweist, in die Filtereinrichtung bzw. in das Gehäuse der Filtereinrichtung eingesetzt, so ist dieser Pin des alternativen Ringfilterelementes ggf. so angeordnet, dass es durch die Führungskontur zum einen nicht zur Pinaufnahme geleitet wird und zum anderen aufgrund der Anordnung des Pins und der ersten Pinaufnahme, der Pin nicht in die erste Pinaufnahme versenkt werden kann. Somit ist der Pin bei Einbau des alternativen zweiten Ringfilterelementes bzw. beim Verschließen des Gehäuses im Weg und im Falle von einem Schließen des Gehäuses unter Gewaltanwendung kann es aufgrund des nicht in der ersten Pinaufnahme versenkbaren Pins zu einer Beschädigung des Gehäuses und/oder des Funktionsträgers und/oder des Ringfilterelementes kommen. Um nun eine solche Beschädigung des Gehäuses und/oder des Ringfilterelementes und/oder des Funktionsträgers zu verhindern, wird vorteilhaft an dem Funktionsträger eine zweite Pinaufnahme ausgebildet, in die der Pin des alternativen zweiten und für die Filtereinrichtung ungeeigneten Ringfilterelementes versenkt werden kann. Somit kann mittels der zweiten Pinaufnahme eine Beschädigung durch Einbau eines solchen alternativen zweiten und ungeeigneten Ringfilterelementes verhindert werden. Zum anderen ist, obwohl in der zweiten Pinaufnahme der Pin eines alternativen zweiten und ungeeigneten Ringfilterelementes versenkt werden kann, dennoch die erste Pinaufnahme frei und somit der durch die erste Pinaufnahme ausgebildete Leerlauföffnung geöffnet, wodurch eine ordnungsgemäße Funktion der Filtereinrichtung aufgrund der geöffneten Leerlauföffnung nicht gegeben ist. Üblicherweise ist dabei die Leerlauföffnung bei eingesetztem Ringfilterelement mit dem Rohraum der Filtereinrichtung verbunden, da das Fluid vom Rohraum durch Druck in den Reinraum gedrückt wird. Ist nun die Leerlauföffnung geöffnet, so wird sich kein Druck im Rohraum einstellen und aufgrund dessen wird das zu filternde Fluid auch nicht von dem Rohraum durch das Filterelement in den Reinraum gepresst werden. Somit ist die Funktion der Filtereinrichtung nicht gegeben und dies kann durch das Fahrzeugmanagement detektiert und vermeldet werden.

Die zweite Pinaufnahme kann als Sackloch und/oder bzgl. der Innenkontur analog zu einer Innenkontur der ersten Pinaufnahme ausgebildet sein. Des Weiteren kann der Funktionsträger mit einer zweiten Führungsstruktur ausgestattet sein, die den Pin eines alternativen zweiten Ringfilterelementes in eben diese zweite Pinaufnahme leitet, wobei die zweite Führungsstruktur analog der ersten Führungsstruktur schraubenförmig geneigt ausgebildet sein kann. Beide Pinaufnahmen können radial und/oder in Umfangsrichtung zueinander versetzt an dem Funktionsträger angeordnet sein. Dabei ist zumindest diejenige Pinaufnahme, die die Leerlauföffnung ausbildet, mit der Leerlaufkanalstruktur zu verbinden, so dass die Funktion der Einbausicherung, umfassend den jeweiligen Pin und die zwei Pinaufnahmen, sichergestellt ist.

In einer bevorzugten Ausführungsform können für eine Filtereinrichtung zwei unterschiedliche Funktionsträger hergestellt werden, wobei bei jedem der Funktionsträger jeweils eine andere Pinaufnahme als Leerlauföffnung ausgebildet bzw. mit dem Leerlaufkanal kommunizierend verbunden ist, während die verbleibende Pinaufnahme zumindest einseitig verschlossen ausgebildet ist. Die als Leerlauf ausgebildete Pinaufnahme ist in jedem Fall mit der Leerlaufkanalstruktur verbunden. Der Unterschied zwischen den beiden Funktionsträgern besteht darin, dass jeweils eine andere Pinaufnahme der zwei Pinaufnahmen als Leerlauföffnung ausgebildet ist. Somit kann durch Auswahl und Einbau des jeweiligen Funktionsträgers jeweils das erste oder das zweite Ringfilterelement für die jeweilige Filtereinrichtung geeignet sein, während bei Einbau des jeweils ungeeigneten Ringfilterelementes die Einbausicherung zu einer Fehlermeldung hinsichtlich der ordnungsgemäßen Funktion der Filtereinrichtung führt. Diese Bereitstellung von zwei unterschiedlichen Funktionsträgern erhöht die Flexibilität während der Herstellung der Filtereinrichtung bei reduzierter Anzahl der Bauteile aufgrund der Verwendbarkeit zumindest des Gehäuses für beide Filtereinrichtungen. In diesem Fall kann die Leerlaufkanalstruktur zwei Leerlaufkanäle aufweisen, die miteinander verbunden sein können, so dass, je nach dem, welche der Pinaufnahmen als Leerlauföffnung ausgebildet ist, dieselbe auch mit der Leerlaufkanalstruktur bzw. mit dem jeweiligen Leerlaufkanal verbunden ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: eine Filtereinrichtung,
- Fig. 2: einen Funktionsträger in Schrägansicht,
- Fig. 3: eine Aufsicht auf den Funktionsträger,
- Fig. 4: den Funktionsträger mit einer gemeinsamen Führungskontur für eine erste Pinaufnahme und eine zweite Pinaufnahme

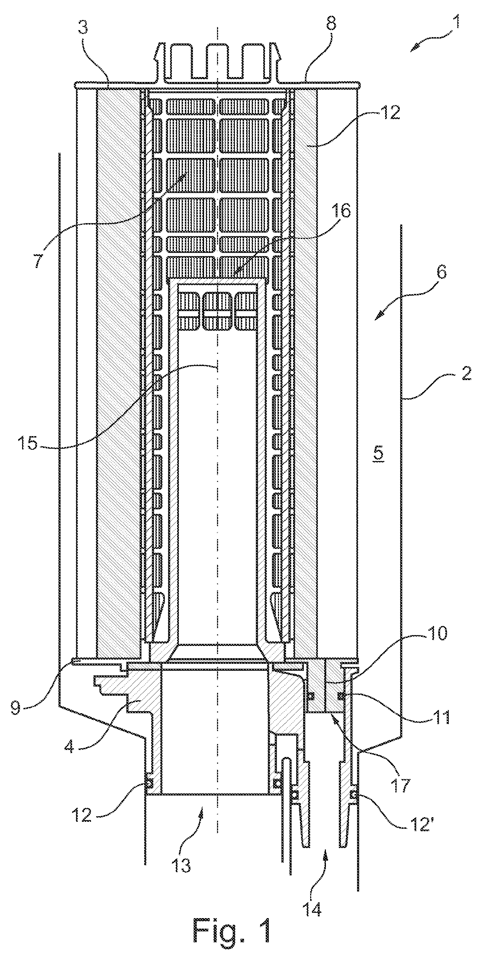

Gemäß Fig. 1, weist eine Filtereinrichtung 1 ein Gehäuse 2, ein Ringfilterelement 3 und einen Funktionsträger 4 auf. Durch das Ringfilterelement 3 ist der Gehäuseinnenraum 5 in einen Rohraum 6 und einen Reinraum 7 unterteilt. Gemäß Fig. 1 ist dabei der Rohraum 6 zwischen Ringfilterelement 3 und Gehäuse 2 angeordnet, während der Reinraum 7 innerhalb des Ringfilterelementes 3 angeordnet ist. Es ist aber bei anderer Ausgestaltung der Filtereinrichtung 1 auch eine umgekehrte Anordnung von Rohraum 6 und Reinraum 7 prinzipiell möglich. Das Ringfilterelement 3 ist zudem mit einer oberen Endscheibe 8 und einer unteren Endscheibe 9 ausgestattet, wobei die untere Endscheibe 9 mit einem Pin 10 versehen ist. Dieser Pin 10 kann wiederum mit einer Dichteinrichtung 11, z. B. in Form einer Ringdichtung, ausgestattet sein. Ein Filterkörper 12 des Ringfilterelementes 3 ist dabei zwischen der oberen Endscheibe 8 und der unteren Endscheibe 9 positioniert. Der Funktionsträger 4 ist in das Gehäuse 2 in dieser in der Fig. 1 gezeigten Ausführungsform über Dichtungen 12,12' mit einem Auslauf 13 und einem Leerlaufkanal 14 verbunden. Des Weiteren weist der Funktionsträger 4 einen Dom 15 auf, der zum einen als Reinkanal 16 ausgebildet ist und das Ringfilterelement 3 stabilisiert. Weiterhin ist am Funktionsträger 4 eine erste Pinaufnahme 17 ausgebildet, in die in Einbaulage des Ringfilterelementes 3 deren Pin 10 eingreift und die durch dessen Dichteinrichtung 11 verschlossen wird. Dabei ist die erste Pinaufnahme 17 als Leerlauföffnung ausgebildet, über die bei entnommenem Ringfilterelement 3 ein eventuell in dem Gehäuse 2 verbleibendes Fluid ablaufen und zu einem nicht gezeigten Fluiddepot rückgeführt werden kann.

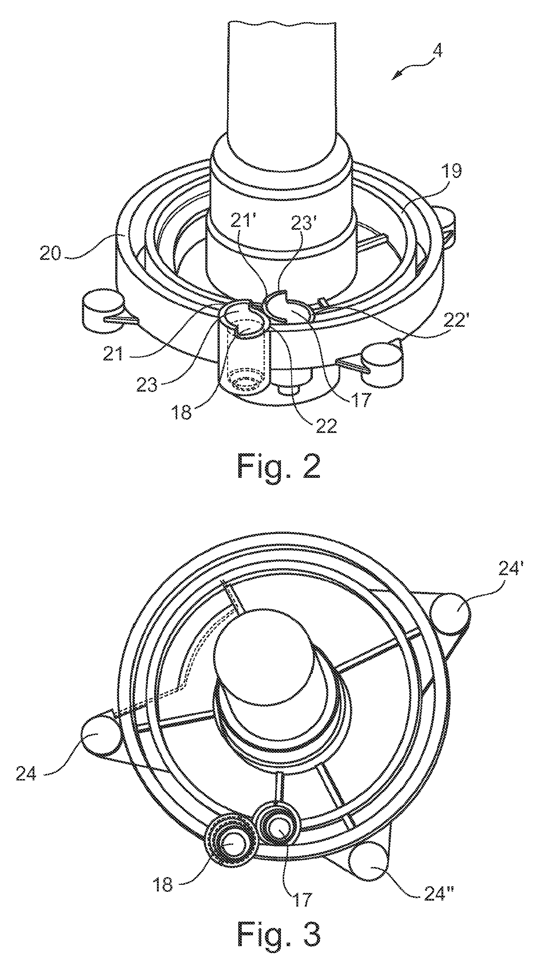

In Fig. 2 ist ein Funktionsträger 4 mit der ersten Pinaufnahme 17 und einer zweiten Pinaufnahme 18 dargestellt. Ist der Funktionsträger 4 in der Form mit zwei Pinaufnahmen 17,18 ausgestattet, so führt das Einsetzen eines alternativen zweiten, ungeeigneten und mit einem Pin ausgestatteten Ringfilterelementes unter Gewaltanwendung nicht zwingend zu einer Beschädigung der Filtereinrichtung 1, da der Pin des alternativen zweiten Ringfilterelementes in die zweite Pinaufnahme 18 versenkt werden kann und somit dem Einbau auch des ungeeigneten Ringfilterelementes nicht störend bzw. beschädigend entgegenwirkt.

Des Weiteren ist der Funktionsträger 4 mit einer ersten ringartigen Führungskontur 19 und einer zweiten ringartigen Führungskontur 20 ausgestattet, die jeweils der ersten Pinaufnahme 17 bzw. der zweiten Pinaufnahme 18 zugeordnet sind. Diese Führungskonturen 19, 20 haben die Aufgabe, einen auf der jeweiligen Führungskontur 19, 20 aufsetzenden Pin 10 zu dem der jeweiligen Führungskontur 19, 20 zugeordneten Pinaufnahme 17, 18 zuzuführen, da in Folge des Aufschraubens eines in den Figuren nicht gezeigten Deckels auf das Filtergehäuse 2 das Ringfilterelement 3 so gedreht wird, dass der jeweilige Pin 10 durch die jeweilige Führungskontur 19,20 zu der jeweilig zugehörenden Pinaufnahme 17,18 geführt wird. Dabei ist die jeweilige Führungskontur 19,20 so ausgebildet, dass eine erste Anbindungsstelle 21,21' der jeweiligen Führungskontur 19,20 an die jeweilige Pinaufnahme 17,18 an der jeweiligen Pinaufnahme 17,18 höher gelegen ist als eine an der jeweiligen Pinaufnahme 17,18 der ersten Anbindungsstelle 21,21' gegenüberliegende zweite Anbindungsstelle 22,22'. Aufgrund dieser Ausbildung sind die Führungskonturen 19,20 schraubenförmig geneigt ausgebildet.

Des Weiteren ist die jeweilige erste Anbindungsstelle 21,21' an der jeweiligen Pinaufnahme 17,18 gegenüber der zweiten Anbindungsstelle 22,22' versetzt und höher angeordnet, so dass an der jeweiligen Pinaufnahme ein Anschlag 23,23' ausgebildet ist. Nun wird der Pin 10 durch die jeweilige Führungskontur 19,20 zu der jeweiligen Pinaufnahme 17,18 gelenkt und aufgrund des jeweiligen Anschlages 23,23' am Weiterlaufen und am Herausspringen aus der jeweiligen Pinaufnahme 17,18 gehindert.

Des Weiteren ist, wie in Fig. 3 gezeigt, der Funktionsträger 4 mit drei Befestigungskonsolen 24,24',24" ausgestattet, mit dem der Funktionsträger 4 mit dem Gehäuse 2 bzw. mit dem Gehäuseboden des Gehäuses 2 verbunden werden kann. Zumindest eine der Pinaufnahme 17,18 ist als Leerlauföffnung auszubilden, die mit einer in den Figuren nicht gezeigten Leerlaufkanalstruktur fluidisch verbunden ist, so dass in dem Gehäuse 2 verbleibendes Fluid über die jeweils als Leerlauföffnung ausgebildete Pinaufnahme 17,18 abfließen kann, wenn der Pin 10 ebendiese als Leerlauföffnung ausgebildete Pinaufnahme 17,18 nicht verschließt.

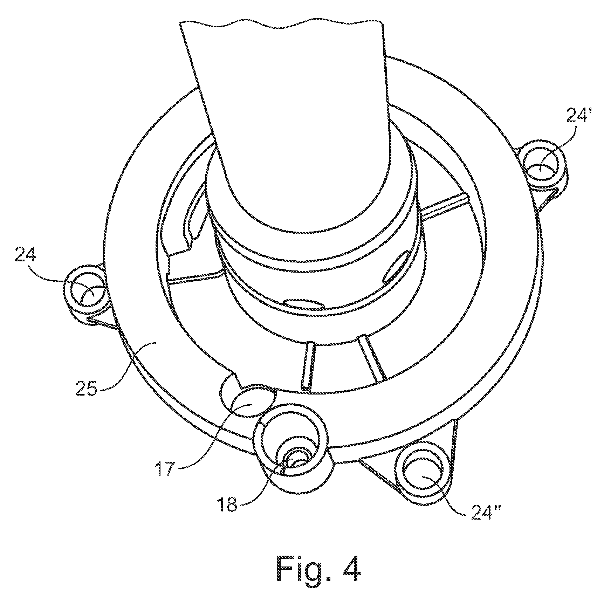

In einer weiteren Ausführungsform können die erste Führungskontur 19 und die zweite Führungskontur 20 auch als eine gemeinsame Führungskontur ausgebildet sein, wie in Fig. 4 gezeigt ist.

## Patentansprüche

1. Filtereinrichtung (1), insbesondere ein Öl- oder Kraftstofffilter, mit
- einem Filtergehäuse (2) und einem Ringfilterelement (3), das an einer unteren Endscheibe (9) einen axial abstehenden Pin (10) aufweist,
- einem im Filtergehäuse (2) angeordneten Funktionsträger (4), der eine mit einem Leerlaufkanal kommunizierend verbundene und als Leerlauföffnung ausgebildete erste Pinaufnahme (17) aufweist, in die der Pin (10) des Ringfilterelements (3) in eingebautem Zustand dicht eingreift, **dadurch gekennzeichnet,**
**dass** der Funktionsträger (4) eine zweite Pinaufnahme (18) aufweist, in die bei der Montage eines alternativen zweiten Ringfilterelements (3) ein Pin (10) desselben eingreift, während die erste Pinaufnahme (17) und damit die Leerlauföffnung geöffnet bleibt.

2. Filtereinrichtung (1) nach Anspruch 1,
**dadurch gekennzeichnet, dass**
die zweite Pinaufnahme (18) im Gegensatz zur ersten Pinaufnahme (17) sacklochartig ausgebildet ist.

3. Filtereinrichtung (1) nach einem der vorhergehenden Ansprüche,
**dadurch gekennzeichnet, dass**
die zweite Pinaufnahme (18) radial und/oder in Umfangsrichtung versetzt zur ersten Pinaufnahme (17) angeordnet ist.

4. Filtereinrichtung (1) nach einem der vorhergehenden Ansprüche,
**dadurch gekennzeichnet, dass**
eine Innenkontur der ersten Pinaufnahme (17) analog zu einer Innenkontur der zweiten Pinaufnahme (18) ausgebildet ist.

5. Filtereinrichtung (1) nach einem der Ansprüche 1 bis 4,
**dadurch gekennzeichnet, dass**
- der Funktionsträger (4) mit dem Filtergehäuse (2) verschweißt, verklebt, verschraubt oder verpresst ist, oder
- der Funktionsträger (4) einstückig mit Filtergehäuse (2) ausgebildet ist.

6. Filtereinrichtung (1) nach einem der Ansprüche 1 bis 5,
**dadurch gekennzeichnet, dass**
der Funktionsträger (4) als Kunststoffspritzgussteil ausgebildet ist.

7. Filtereinrichtung (1) nach einem der Ansprüche 1 bis 6,
**dadurch gekennzeichnet, dass**
zwei ringartige Führungskonturen (19,20) vorgesehen sind, wovon die eine zur ersten Pinaufnahme (17) und die andere zur zweiten Pinaufnahme (18) führt.

8. Filtereinrichtung (1) nach Anspruch 7,
**dadurch gekennzeichnet, dass**
die beiden ringartigen Führungskonturen (19,20) schraubenförmig geneigt sind.

9. Filtereinrichtung (1) nach einem der Ansprüche 1 bis 8,
**dadurch gekennzeichnet, dass**
der Funktionsträger (4) einen zentralen Dom (15) aufweist, der im Einbauzustand in einen Innenraum des Ringfilterelements (3) hineinragt.

10. Filtereinrichtung (1) nach einem der Ansprüche 1 bis 9,
**dadurch gekennzeichnet, dass**
der Funktionsträger (4) zumindest drei radial abstehende Befestigungskonsolen (24,24',24") aufweist, über welche er im Filtergehäuse (2) befestigt ist.
